# EUROPÄISCHE PATENTSCHRIFT

(11) **EP 3 220 014 B1**
(45) Veröffentlichungstag und Bekanntmachung des Hinweises auf die Patenterteilung: **05.12.2018**
(21) Anmeldenummer: 17155864.6
(22) Anmeldetag: 13.02.2017
(51) Int. Cl.: F16H 61/444, B60K 17/356

(54) **HYDRAULISCHE ANTRIEBSANORDNUNG FÜR EIN FAHRZEUG UND VERFAHREN ZUM WECHSELN ZWISCHEN ZWEI HYDRAULISCHEN BETRIEBSMODI EINER HYDRAULISCHEN ANTRIEBSANORDNUNG**
HYDRAULIC DRIVE ASSEMBLY FOR A VEHICLE AND METHOD FOR CHANGING BETWEEN TWO HYDRAULIC OPERATING MODES OF A HYDRAULIC DRIVE ASSEMBLY
DISPOSITIF D'ENTRAÎNEMENT HYDRAULIQUE POUR UN VÉHICULE ET PROCÉDÉ DE CHANGEMENT ENTRE DEUX MODES DE FONCTIONNEMENT HYDRAULIQUES D'UN DISPOSITIF D'ENTRAÎNEMENT HYDRAULIQUE

(30) Priorität: 19.02.2016 DE 102016102914
(43) Veröffentlichungstag der Anmeldung: 20.09.2017
(73) Patentinhaber: Max Holder GmbH, 72555 Metzingen (DE)
(72) Erfinder: Werner, Tobias, 72639 Neuffen (DE); Bauknecht, Bernd, 72622 Nürtingen (DE)
(74) Vertreter: Kohler Schmid Möbus Patentanwälte

(56) Entgegenhaltungen:
- DE-A1-102006 058 802

## Beschreibung

Die Erfindung geht aus von einer hydraulischen Antriebsanordnung für ein Fahrzeug mit einem Hoch- und einem Niederdruckstrang, wobei die hydraulische Antriebsanordnung in wenigstens zwei hydraulischen Betriebsmodi betreibbar ist.

Derartige hydraulische Antriebsanordnungen werden beispielsweise in multifunktionalen, hydraulisch angetriebenen Nutzfahrzeugen im kommunalen und landwirtschaftlichen Bereich eingesetzt. Bei diesen hydraulisch angetriebenen Fahrzeugen wird ausgehend von einer Hydraulikpumpe die benötigte Antriebsleistung über einen Hochdruckstrang an hydraulische Verbraucher, insbesondere hydraulische Radmotoren, übertragen. Über einen den Radmotoren nachgeschalteten Niederdruckstrang gelangt Hydraulikfluid, insbesondere Hydrauliköl, wieder zurück zur Hydraulikpumpe.

Ein hydraulische Antriebsanordnung in Form eines hydrostatischen Mehrmotorenantriebs ist aus der Druckschrift DE 10 2006 058 802 A1 bekannt.

Um den verschiedenen Nutzungsanforderungen gerecht zu werden, weisen derartige Fahrzeuge mehrere hydraulische Betriebsmodi auf. So ist es oftmals vorgesehen, zwischen Ein- und Mehrachsantrieb umschalten zu können. Derartige Fahrzeuge weisen hierzu beispielsweise je einen aus einem Hoch- und einem Niederdruckstrang bestehenden Teilkreislauf für eine Vorderachse und eine Hinterachse auf. Durch geeignete Ventilanordnungen kann dann ein Teilkreislauf zu- oder abgeschaltet werden, sodass ein Fahrzeug ein- oder zweiachsig angetrieben wird.

Auch ist es bekannt, hydraulische Radmotoren einzusetzen, die in mehreren Gängen betrieben werden können. Dazu sind in oder an den Radmotoren Ventilvorrichtungen vorgesehen, mit denen Schluckvolumina der Radmotoren verändert werden können, beispielsweise, indem die Anzahl tatsächlich genutzter Kolben variiert wird. Somit ergibt sich eine Vielzahl möglicher Betriebsmodi, in denen derartige hydraulische Antriebsanordnungen bzw. Fahrzeuge betrieben werden können.

Dabei hat sich jedoch herausgestellt, dass häufig während eines Wechselns bzw. Schaltens zwischen zwei derartigen Betriebsmodi, beispielsweise beim Wechsel von Zwei- auf Einachsantrieb, ein spürbarer Schaltruck entsteht. Dieser Schaltruck führt sowohl zu einer Komfortreduktion für einen Fahrer des Fahrzeugs als auch zu einer erhöhten Belastung der Antriebsanordnung und somit zu einem erhöhten Verschleiß.

Es hat sich ferner gezeigt, dass ein derartiger Schaltruck dadurch entsteht, dass sich in Hoch- und/oder Niederdrucksträngen der Antriebsanordnung während des Wechselns von einem in einen anderen Betriebsmodus Druckspitzen ausbilden. Diese Druckspitzen können Wertebereiche erreichen, die außerhalb eines Normaldruckbereichs liegen, sodass sogar druckbegrenzende Hochdrucksicherheitsventile teilweise ansprechen, um die Antriebsanordnung vor Beschädigungen zu schützen.

Aufgabe der vorliegenden Erfindung ist es daher, eine Lösung anzubieten, sodass bei einem Wechsel von einem in einen anderen Betriebsmodus einer hydraulischen Antriebsanordnung, insbesondere für ein hydraulisch betriebenes Fahrzeug, kein oder nur ein abgeschwächter Schaltruck entsteht und somit Bedienkomfort und Langlebigkeit des Fahrzeugs verbessert werden.

Gelöst wird die Aufgabe durch eine hydraulische Antriebsanordnung für ein Fahrzeug mit einem Hoch- und einem Niederdruckstrang, wobei die hydraulische Antriebsanordnung in wenigstens zwei hydraulischen Betriebsmodi betreibbar ist und wobei zwischen Hoch- und Niederdruckstrang eine steuerbare Kurzschlussvorrichtung angeordnet ist, mit der ein Kurzschluss zwischen Hoch- und Niederdruckstrang herstellbar ist. Somit kann auf besonders einfache und kostengünstige Weise ein Schaltruck während eines Wechselns zwischen den beiden hydraulischen Betriebsmodi vermieden werden. Das Ansteuern der Kurzschlussvorrichtung erfolgt vorzugsweise, während sich der Druck im Hochdruckstrang in einem Normaldruckbereich befindet. Soll beispielsweise von Zweiachs- auf Einachsbetrieb umgeschaltet werden, so bedeutet dies, dass die tatsächliche Bahn (Durchflusspfad) eines in der hydraulischen Antriebsanordnung bzw. dem Hoch- und dem Niederdruckstrang zirkulierenden Hydraulikfluids, beispielsweise eines Hydrauliköls, verändert wird. Damit einhergehend kann es beispielsweise erforderlich sein, dass das Fördervolumen einer die hydraulische Antriebsanordnung speisenden Hydraulikpumpe zurückgefahren wird. Solange sich die Hydraulikpumpe jedoch noch nicht in einem hierfür vorgesehenen neuen Betriebszustand befindet, wird zu viel Hydraulikfluid gepumpt, wodurch es zu einer Druckerhöhung kommt. Wird nun durch die Kurzschlussvorrichtung ein Kurzschluss zwischen Hoch- und Niederdruckstrang hergestellt, so wird ein derartiger unerwünschter Druckaufbau vermieden bzw. reduziert. Überschüssiger Druck bzw. Hydraulikfluid kann über den Kurzschluss abgebaut werden. Eine Druckspitze und somit ein Schaltruck werden vermieden. Sobald sich die Hydraulikpumpe dann im neuen Betriebszustand befindet, kann mittels der Kurzschlussvorrichtung der Kurzschluss aufgehoben werden, sodass wieder die volle Leistung über den Hochdruckstrang übertragen wird.

Insbesondere kann ein hydraulischer Verbraucher, vorzugsweise ein hydraulischer Radmotor, zwischen Hoch- und Niederdruckstrang angeordnet sein. Auch können mehrere hydraulische Verbraucher, beispielsweise mehrere hydraulische Radmotoren, insbesondere zwei Radmotoren je angetriebene Achse, vorgesehen sein. Ein solcher hydraulischer Radmotor kann ein hydraulisch angetriebener Axialkolbenmotor sein. Auch kann ein hydraulischer Verbraucher ein hydraulischer Nebenabtrieb sein, beispielsweise eine Zapfwelle.

Dabei ist es besonders vorteilhaft, wenn die hydraulische Antriebsanordnung eine Gangwechseleinheit aufweist, mit der ein Schluckvolumen des hydraulischen Verbrauchers veränderbar ist. Insbesondere kann als hydraulischer Verbraucher ein hydraulischer Radmotor mit Gangwechseleinheit vorgesehen sein. Eine solche Gangwechseleinheit kann dazu dienen, zwischen zwei oder mehr Betriebsmodi des Radmotors wählen zu können. Dabei kann jeweils ein Betriebsmodus einem vorgegebenen Schluckvolumen des Radmotors entsprechen. Beispielsweise kann eine Gangwechseleinheit vorgesehen werden, mit der ein Radmotor von einem Schluckvolumen von 400 cm³ auf 200 cm³ und umgekehrt umgeschaltet werden kann.

Weist die hydraulische Antriebsanordnung eine Flusssteuerungsvorrichtung zur Steuerung eines Durchflusspfades eines Hydraulikfluids, das heißt des resultierenden Strömungsverlaufes des Hydraulikfluids, durch die hydraulische Antriebsanordnung auf, so kann hiermit auf besonders einfache Weise eine Umschaltung von Ein- auf Mehrachsbetrieb, insbesondere Zweiachsbetrieb, und umgekehrt erreicht werden. Dazu kann die hydraulische Antriebsanordnung in mehrere Teilkreisläufe unterteilt werden, die mittels der Flusssteuerungsvorrichtung zu- oder abgeschaltet werden können. Eine solche Flusssteuerungsvorrichtung kann beispielsweise aus einer oder mehreren Ventileinheiten gebildet werden, mit denen beispielsweise innerhalb eines Teilkreislaufs jeweils ein Hochdruck- und ein Niederdruckstrang unterbrochen, durchgängig geschaltet und/oder umgelenkt werden kann.

Auch ist es besonders vorteilhaft, wenn die steuerbare Kurzschlussvorrichtung eine Ventileinheit aufweist. Auf diese Weise lässt sich auf besonders einfache Weise steuerbar ein Kurzschluss herstellen. Es kann dabei vorgesehen werden, die Ventileinheit elektrisch, pneumatisch und/oder mechanisch zu betätigen.

Die Ventileinheiten können beispielsweise 2/2- oder 3/2-Wegeventile aufweisen.

Eine besonders vorteilhafte automatische Vermeidung eines Schaltrucks lässt sich erzielen, wenn die Ventileinheit der Kurzschlussvorrichtung als selbststeuernde Ventileinheit gebildet ist. Sie kann dabei vorzugsweise als Druckbegrenzungsventil ausgebildet sein. Auch kann sie als selbststeuernde Ventileinheit ausgebildet sein, die bei Überschreiten einer bestimmten Anstiegssteilheit des Druckes im Hochdruckstrang selbsttätig einen Kurzschluss herstellt. Bei Einsatz eines Druckbegrenzungsventils als selbststeuernde Ventileinheit kann vorgesehen sein, dass ein Kurzschluss selbsttätig hergestellt wird, wenn der im Hochdruckstrang anliegende Druck einen bestimmten Grenzwert innerhalb eines Normaldruckbereichs überschreitet. Unter Normaldruckbereich soll dabei ein Druckbereich verstanden werden, der dem Druck unter gewöhnlichen Betriebsbedingungen entspricht, innerhalb derer keine Beschädigungen oder Zerstörungen des Systems durch zu hohen Druck zu erwarten sind.

Auch kann eine Verzögerungseinheit, vorzugsweise ein Verzögerungsrelais, vorgesehen sein, die mit einem Steuereingang der Ventileinheit der Kurzschlussverbindung verbunden ist. Eine solche Verzögerungseinheit kann dazu benutzt werden, den Kurzschluss zeitlich versetzt gegenüber dem Wechsel der Betriebsmodi herzustellen. So kann der Zeitbereich, in dem der Kurzschluss hergestellt und aufrechterhalten wird, präzise an eine zu erwartende, zu minimierende Druckspitze angepasst werden.

Auch kann die Kurzschlussvorrichtung in die Gangwechseleinheit und/oder die Flusssteuerungsvorrichtung integriert sein. Im Bereich dieser Elemente sind Hoch- und Niederdruckstränge gut erreichbar. Auch können auf diese Elemente wirkende Steuersignale direkt abgegriffen werden und zur Steuerung der Kurzschlussvorrichtung verwendet werden.

Somit lässt sich ein integriertes Hydraulikelement zum sanften Wechseln von Betriebsmodi herstellen.

Ferner kann das Fahrzeug eine Steuereinheit zur Steuerung der Kurzschlussvorrichtung aufweisen. Die Steuereinheit kann beispielsweise Teil eines Fahrbetriebsrechners sein. Dabei kann vorgesehen sein, dass die Steuereinheit sowohl den Wechsel der Betriebsmodi steuert als auch die Kurzschlussvorrichtung direkt oder indirekt über ein Verzögerungsrelais steuert. Dazu kann eine Signalleitung die Steuereinheit direkt oder indirekt über ein Verzögerungsrelais mit der Kurzschlussvorrichtung, insbesondere mit der Ventileinheit der Kurzschlussvorrichtung, verbinden. Somit können auf einfache Weise optimale Zeitabläufe der verschiedenen Teilprozesse realisiert werden.

Ferner betrifft die Erfindung ein Verfahren zum Wechseln zwischen zwei hydraulischen Betriebsmodi einer hydraulischen Antriebsanordnung für ein Fahrzeug, die einen Hoch- und einen Niederdruckstrang aufweist, umfassend die Schritte:
a) Wechseln zwischen den zwei Betriebsmodi zu einem Wechselzeitpunkt;
b) Herstellen eines Kurzschlusses zwischen Hoch- und Niederdruckstrang zu einem vorgegebenen Auslösezeitpunkt und/oder bei Eintritt eines Start-Ereignisses, wobei der Druck im Hochdruckstrang in einem Normaldruckbereich liegt;
c) Aufrechterhalten des Kurzschlusses über eine vorgegebene Haltedauer und/oder bis zum Eintritt eines vordefinierten End-Ereignisses.

Als Start-Ereignis kann beispielsweise das Überschreiten eines vorgegebenen Grenzwertes durch den am Hochdruckstrang anliegenden Druck innerhalb des Normaldruckbereichs und/oder das Erreichen oder Überschreiten eines vorgegebenen Grenzwertes durch die Flankensteilheit, das heißt die Anstiegsgeschwindigkeit des Druckes, vorgesehen sein. Als End-Ereignis kann beispielsweise vorgesehen werden, dass der Druck unter einen vorbestimmten Grenzwert fällt. Auch kann beispielsweise vorgesehen sein, als End-Ereignis das Auftreten eines Druckabfalls zu definieren. Somit kann durch Herstellen und zeitlich begrenztes Aufrechterhalten des Kurzschlusses eine Druckspitze nach einem Wechseln zwischen den zwei Betriebsmodi reduziert oder verhindert werden. Benutzungskomfort und Haltbarkeit des Systems können somit wesentlich verbessert werden.

Auch kann vorgesehen sein, dass zwischen den zwei Betriebsmodi durch Veränderung eines Schluckvolumens eines hydraulischen Verbrauchers gewechselt wird. Ist der hydraulische Verbraucher beispielsweise ein hydraulischer Radmotor, so können dadurch Drehmoment und Drehgeschwindigkeit des Radmotors auf den jeweiligen Bedarf angepasst werden.

Es kann vorgesehen sein, dass zwischen den zwei Betriebsmodi auch durch Veränderung eines Durchflusspfades eines Hydraulikfluids durch die hydraulische Antriebsanordnung gewechselt wird, das heißt, indem der tatsächliche Verlauf des Flusses des Hydraulikfluids verändert wird. Dies ermöglicht es, beispielsweise zwischen Ein- und Mehrachsbetrieb umzuschalten und/oder einen oder mehrere Nebenabtriebe zu- oder abzuschalten.

Besonders bevorzugt sind Ausgestaltungen der Erfindung, bei denen der Auslösezeitpunkt vor, zeitgleich zum oder weniger als 1 s nach dem Wechselzeitpunkt liegt. So kann in einem Fall der Auslösezeitpunkt zeitlich vor dem Wechselzeitpunkt liegen oder mit dem Wechselzeitpunkt zusammenfallen. Somit wird der Kurzschluss vor oder gleichzeitig mit dem Wechseln der Betriebsmodi hergestellt. So kann einfach sichergestellt werden, dass jedenfalls eine Druckspitze über den Kurzschluss abgefangen wird. Im Falle, dass der Auslösezeitpunkt weniger als 1 s nach dem Wechselzeitpunkt liegt, kann bei üblichen hydraulisch angetriebenen Fahrzeugen dennoch sichergestellt werden, dass eine Druckspitze weitestgehend abgefangen wird, gleichzeitig aber nur geringe, die Energieeffizienz der Antriebsanordnung reduzierende Leistungsverluste entstehen.

Auch können Effizienzverluste reduziert werden, wenn die Haltedauer kurz ist, das heißt beispielsweise< 0,5 s, vorzugsweise < 0,3 s, insbesondere 0,25 s, beträgt.

Während des Kurzschlusses ist die an den hydraulischen Verbraucher übertragene Leistung reduziert. Ist die Haltedauer kurz gewählt, ist diese kurzzeitige Leistungsreduktion aufgrund von beispielsweise Trägheit des Fahrzeugs für einen Benutzer des Fahrzeugs kaum oder nicht spürbar.

Im Sinne der Erfindung ist unter Hydraulik jede Form eines fluidbasierten Leistungsübertragungssystems zu verstehen. Insbesondere kann die hydraulische Antriebsanordnung bzw. das Fahrzeug sowie das Verfahren gemäß der Erfindung beispielsweise für Hydrauliköl-betriebene oder auch für pneumatisch betriebene Leistungsübertragungssysteme eingesetzt werden.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine schematische Darstellung eines Fahrzeugs mit einer hydraulischen Antriebsanordnung gemäß der Erfindung;
- Fig. 2: ein Zeitdiagramm zur schematischen Darstellung zeitlicher Abläufe des Verfahrens gemäß der Erfindung.

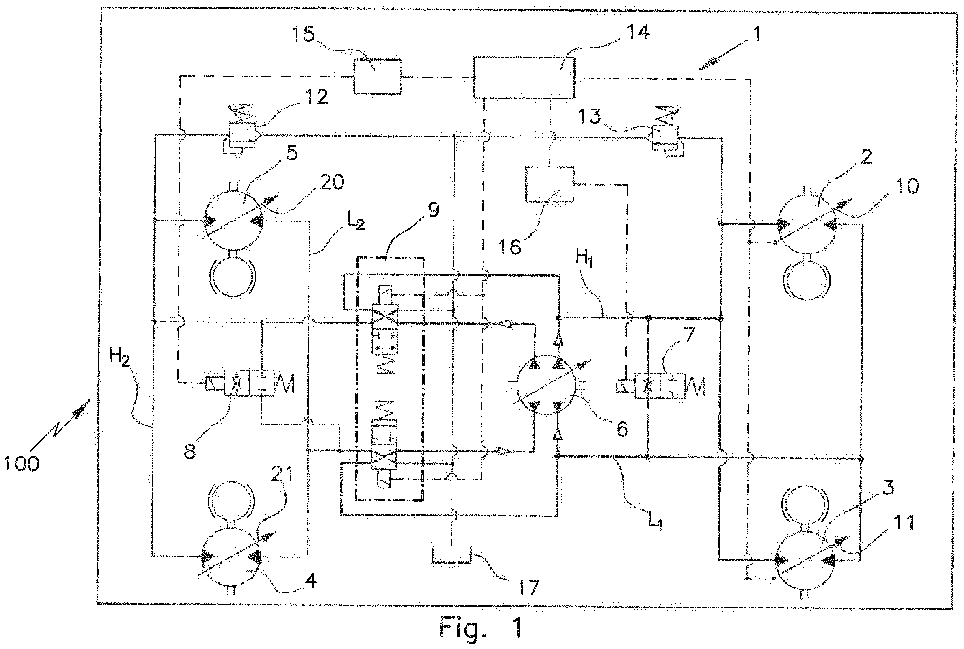

Die Fig. 1 zeigt ein hydraulisch betriebenes Fahrzeug 100 mit einer hydraulischen Antriebsanordnung 1 mit vier hydraulisch betriebenen Radmotoren 2, 3, 4, 5. Die Radmotoren 2, 3 sind dabei einer Vorderachse und die Radmotoren 4,5 einer Hinterachse des Fahrzeugs 100 zugeordnet. Eine Hydraulikpumpe 6, in diesem Fall eine Zweikreispumpe, dient zur Leistungsversorgung der Antriebsanordnung 1. Die Antriebsanordnung 1 ist aus zwei Teilkreisläufen gebildet. Ein erster Teilkreislauf besteht aus einem Hochdruckstrang H₁ und einem Niederdruckstrang L₁. Die Stränge H₁, L₁ treiben die Radmotoren 2, 3 und somit die Vorderachse des Fahrzeugs 1 an. Ein zweiter Teilkreislauf, der die Radmotoren 4, 5 antreibt, wird durch einen Hochdruckstrang H₂ und einen Niederdruckstrang L₂ gebildet. Die Niederdruckstränge L₁, L₂ bilden dabei jeweils zur Hydraulikpumpe 6 zurückführende Rückläufe.

Zwischen dem Hochdruckstrang H₁ und dem Niederdruckstrang L₁ ist eine Kurzschlussvorrichtung 7 angeordnet. Zwischen dem Hochdruckstrang H₂ und dem Niederdruckstrang L₂ ist eine zweite Kurzschlussvorrichtung 8 angeordnet. Die Kurzschlussvorrichtungen 7, 8 sind dabei als steuerbare Ventileinheiten ausgebildet. Sie weisen 2/2-Wegeventile mit Düsen auf, deren Öffnungsdurchmesser 2,5 mm, in alternativen Ausgestaltungen 2,0 mm, betragen.

Mittels einer Flusssteuerungsvorrichtung 9 können die Stränge H₂, L₂ zu- oder abgeschaltet werden. Dazu weist die Flusssteuerungsvorrichtung 9 zwei steuerbare Ventileinheiten auf, mit denen ein Pumpkreis der als Zweikreispumpe ausgebildeten Hydraulikpumpe 6 auf die Stränge H₂, L₂ oder wahlweise auf die Stränge H₁, L₁ geschaltet werden kann. Somit kann mittels der Flussteuerungsvorrichtung 9 zwischen einem einachsigen und einem zweiachsigen Antrieb umgeschaltet werden.

In diesem Ausführungsbeispiel sind die hydraulischen Radmotoren 2, 3, 4, 5 als Axialkolbenmotoren ausgebildet. Die Radmotoren 2, 3, 4, 5 weisen in diesem Ausführungsbeispiel Gangwechseleinheiten 10, 11, 20, 21 auf. Mittels der Gangwechseleinheiten 10, 11, 20, 21 kann die Anzahl der je Radmotor 2, 3, 4, 5 effektiv eingesetzten Kolben ausgewählt werden. Somit kann das Schluckvolumen je Radmotor 2, 3, 4, 5 mittels der Gangwechseleinheiten 10, 11, 20, 21 zwischen 200 cm³ und 400 cm³ umgeschaltet werden. Als Überlastungsschutz weist die hydraulische Antriebsanordnung 1 ferner zwei Hochdrucksicherheitsventile 12, 13 auf, die als Druckbegrenzungsventile ausgebildet sind und jeweils die Radmotoren 4, 5 bzw. 2, 3 vor Drucküberschreitungen außerhalb des zulässigen Einsatzbereiches der Radmotoren 2, 3, 4, 5 schützen. In diesem Ausführungsbeispiel sind die Hochdrucksicherheitsventile 12, 13 auf einen Maximaldruck von 450 bar eingestellt und schalten in einem Störfall die Hochdruckstränge H₁, H₂ zur Druckminderung auf einen drucklosen Hydrauliksumpf 17.

Die hydraulische Antriebsanordnung 1 wird durch eine Steuereinheit 14 gesteuert. Diese ist Teil eines Fahrbetriebsrechners des Fahrzeugs 1. Die Steuereinheit 14 ist mit den Gangwechseleinheiten 10, 11, 20, 21, der Flusssteuerungsvorrichtung 9, der Kurzschlussvorrichtung 7 sowie der Kurzschlussvorrichtung 8 verbunden. Die Verbindungen zu den Kurzschlussvorrichtungen 7, 8 sind dabei über zwei als Verzögerungsrelais 15, 16 ausgebildete Verzögerungseinheiten geführt. Die Verzögerungsrelais 15, 16 weisen dabei Verzögerungen von 0,1 s und Haltedauern von 0,25 s auf.

Das Fahrzeug 100 bzw. die hydraulische Antriebsanordnung 1 kann somit in mehreren Betriebsmodi betrieben werden. Betriebsmodi ergeben sich einerseits aus der Einstellung der Gangwechseleinheiten 10, 11, 20, 21 bzw. der hieraus resultierenden Einstellungen der Schluckvolumina der Radmotoren 2, 3, 4, 5. Weiterhin kann mittels der Flusssteuerungsvorrichtung 9 zwischen Vorderachsantrieb und Beidachsantrieb umgeschaltet werden.

Im Folgenden soll das Verfahren zum Wechsel zwischen zwei Betriebsmodi näher erläutert werden. Beispielhaft wird dazu ein Wechsel zwischen Zweiachs- und Einachsbetrieb herangezogen. Mit anderen Worten soll ein Wechsel betrachtet werden, durch den die Stränge H₂, L₂ abgeschaltet werden und somit das Gesamtschluckvolumen der vier Radmotoren 2, 3, 4, 5 von 4 x 200 cm auf 2 x 200 cm³ reduziert, das heißt halbiert, wird.

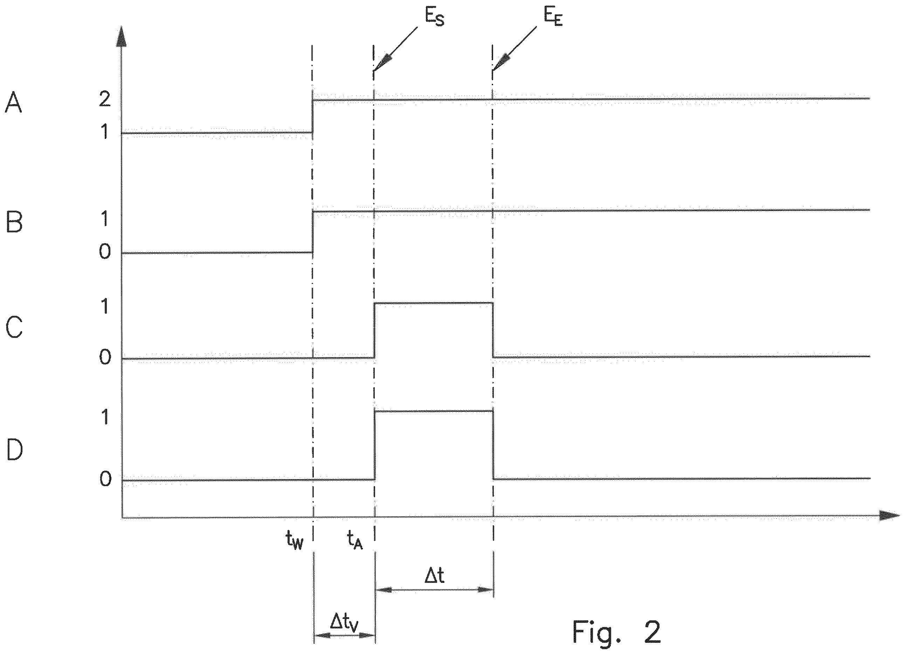

Hierzu zeigt Fig. 2 ein schematisches Zeitdiagramm. Linie A stellt den Betriebsmodus dar. In diesem Falle entspricht 1 einem ursprünglichen Betriebsmodus, das heißt 4 x 200 cm³, und 2 entspricht einem neuen Betriebsmodus, das heißt 2 x 200 cm³. Linie B versinnbildlicht den Zustand der Flusssteuerungsvorrichtung 9. 0 entspricht einem Ausgangszustand, das heißt Durchfluss von Hydraulikfluid durch alle Stränge H₁, H₂, L₁, L₂ bzw. Antrieb aller vier Radmotoren 2, 3, 4, 5. 1 entspricht einem neuen Zustand, das heißt ausschließlicher Durchfluss der Stränge H₁, L₁ bzw. Antrieb nur der der Vorderachse 2, 3 zugeordneten Radmotoren. Die Linie C gibt die Ausgangssignale des Verzögerungsrelais 16 wieder. Schließlich stellt die Linie D den Zustand der Kurzschlussvorrichtung 7 dar. 0 entspricht einem gesperrten Zustand, 1 entspricht einem geschlossenen, das heißt kurzschlussbildenden, Zustand.

Zu einem Wechselzeitpunkt t_{w} wird die Flusssteuerungsvorrichtung 9 umgeschaltet. Somit erfolgt ein Wechsel von dem 1-Betriebsmodus in den neuen 2-Betriebsmodus. Gleichzeitig wird die Hydraulikpumpe 6 dem neuen Betriebsmodus angepasst, das heißt, das Fördervolumen wird zurückgefahren. Da diese Regelung der Hydraulikpumpe 6 langsamer erfolgt als der Wechsel des Betriebsmodus bzw. das Umschalten der Flusssteuerungsvorrichtung 9, würde es zu einer Druckspitze in den Strängen H₁, L₁ kommen. Um diese Druckspitze zu vermeiden, sendet die Steuereinheit 14 einen Steuerimpuls zeitgleich zum Wechsel des Betriebsmodus an das Verzögerungsrelais 16. Nach Ablauf eines vorgegebenen Zeitintervalls Δtᵥ, das heißt zu einem Auslösezeitpunkt t_{A}, schaltet das Verzögerungsrelais 16 durch. Das Zeitintervall Δtᵥ bzw. das Verzögerungsrelais 16 ist dabei so gewählt, dass ein Großteil der zu erwartenden Druckspitze abgefangen werden kann, gleichzeitig jedoch nur geringe Leistungsverluste durch den Kurzschluss entstehen. In diesem Ausführungsbeispiel beträgt das Zeitintervall Δtᵥ 0,1 s. Somit wird ein Kurzschluss 0,1 s nach Wechsel des Betriebsmodus zwischen den Strängen H₁, L₁ hergestellt. Dieser Zustand ist in Fig. 1 abgebildet. Nach Ablauf einer vorgegebenen Haltedauer Δt, hier 0,25 s, öffnet das Verzögerungsrelais 16, wodurch die Kurzschlussvorrichtung 7 wieder gesperrt wird. Die Haltedauer Δt ist dabei in Abhängigkeit von der Regelungsgeschwindigkeit der Hydraulikpumpe 6 so gewählt, dass der Kurzschluss erst dann aufgehoben wird, sobald sich die Hydraulikpumpe 6 im gewünschten neuen Betriebszustand befindet, das heißt, auf das gewünschte neue Fördervolumen eingeregelt ist. Sodann ist der Kurzschluss beendet. Die Vorderachse wird somit ohne Leistungsverluste im neuen Betriebsmodus angetrieben.

In alternativen Ausführungen der Erfindung ist es vorgesehen, dass anstelle eines vorgegebenen Verzögerungsintervalles Δtᵥ der Auslösezeitpunkt t_{A} durch Auftreten eines Start-Ereignisses E_{S}, beispielsweise Überschreiten eines vordefinierten Grenzwertes des Druckes im Hochdruckstrang H₁, beispielsweise 105 % des gewünschten Drucks im neuen Betriebsmodus, definiert wird. Zusätzlich ist es in alternativen Ausführungen vorgesehen, auch die Haltedauer Δt durch ein End-Ereignis E_{E}, beispielsweise Abfall des Drucks im Hochdruckstrang H₁ zu definieren. Auf diese Weise kann eine Druckspitze während des Wechselns des Betriebsmodus vermieden werden. Ein Schaltruck wird vermieden. Die Hochdrucksicherheitsventile 12, 13 werden nicht ausgelöst.

Auf analoge Weise können auch die Schluckvolumina der Radmotoren 2, 3, 4, 5 mittels der Gangwechseleinheiten 10, 11, 20, 21 umgeschaltet werden und somit ein Betriebsmodus von beispielsweise 4 x 400 cm³ Gesamtschluckvolumen auf 4 x 200 cm³ Gesamtschluckvolumen umgeschaltet werden. In diesem Falle sind die Gangwechseleinheiten 10, 11, 20, 21 anstelle der Flusssteuerungsvorrichtung 9 umzuschalten. Da sich in diesem Falle in beiden Teilkreisläufen bzw. in allen Hoch- und Niederdrucksträngen H₁, H₂, L₁, L₂ eine Druckspitze ausbilden kann, müssen beide Kurzschlussvorrichtungen 7 und 8 zeitparallel angesteuert werden. Dementsprechend steuert in diesem Fall die Steuereinheit 14 beide Verzögerungsrelais 15, 16 anstelle nur des Verzögerungsrelais 16 an. Deren Ansteuerung erfolgt in analoger Weise durch Impulse der Steuereinheit 14, die zeitgleich zum Wechsel des Betriebsmodus, das heißt in diesem Falle zum Wechsel der vier Schluckvolumina der vier Radmotoren 2, 3, 4, 5, erzeugt werden.

### Bezugszeichen

- t_{W}: Wechselzeitpunkt
- t_{A}: Auslösezeitpunkt
- Δt: Haltedauer
- E_{S}, E_{E}: Ereignis
- H₁, H₂: Hochdruckstrang
- L₁, L₂: Niederdruckstrang
- 1: Hydraulische Antriebsanordnung
- 2, 3, 4, 5: Radmotor
- 6: Pumpe
- 7,8: Kurzschlussvorrichtung
- 9: Flusssteuerungsvorrichtung
- 10, 11, 20, 21: Gangwechseleinheit
- 12, 13: Hochdrucksicherheitsventile
- 14: Steuereinheit
- 15, 16: Verzögerungsrelais
- 17: Hydrauliksumpf
- 100: Fahrzeug
- A: Betriebsmodus
- B: Zustand Gangwechseleinheit beziehungsweise Flusssteuerungsvorrichtung
- C: Zustand Verzögerungsrelais
- D: Zustand Kurzschlussvorrichtung

## Patentansprüche

1. Hydraulische Antriebsanordnung (1) für ein Fahrzeug (100) mit einem Hoch- (H₁, H₂) und einem Niederdruckstrang (L₁, L₂), wobei die hydraulische Antriebsanordnung (1) in wenigstens zwei hydraulischen Betriebsmodi betreibbar ist, **dadurch gekennzeichnet, dass** zwischen Hoch- (H₁, H₂) und Niederdruckstrang (L₁, L₂) eine steuerbare Kurzschlussvorrichtung (7, 8) angeordnet ist, mit der ein Kurzschluss zwischen Hoch- (H₁, H₂) und Niederdruckstrang (L₁, L₂) herstellbar ist.

2. Hydraulische Antriebsanordnung nach Anspruch 1, **dadurch gekennzeichnet, dass** ein hydraulischer Verbraucher, vorzugsweise ein hydraulischer Radmotor (2, 3, 4, 5), zwischen Hoch- (H₁, H₂) und Niederdruckstrang (L₁, L₂) angeordnet ist.

3. Hydraulische Antriebsanordnung nach einem der vorhergehenden Ansprüche, **dadurch gekennzeichnet, dass** die hydraulische Antriebsanordnung (1) eine Gangwechseleinheit (10, 11, 20, 21) aufweist, mit der ein Schluckvolumen des hydraulischen Verbrauchers veränderbar ist.

4. Hydraulische Antriebsanordnung nach einem der vorhergehenden Ansprüche, **dadurch gekennzeichnet, dass** die hydraulische Antriebsanordnung (1) eine Flusssteuerungsvorrichtung (9) zur Steuerung eines Durchflusspfades eines Hydraulikfluids durch die hydraulische Antriebsanordnung (1) aufweist.

5. Hydraulische Antriebsanordnung nach einem der vorhergehenden Ansprüche, **dadurch gekennzeichnet, dass** die steuerbare Kurzschlussvorrichtung (7, 8) eine Ventileinheit aufweist.

6. Hydraulische Antriebsanordnung nach einem der vorhergehenden Ansprüche, **dadurch gekennzeichnet, dass** die Ventileinheit der Kurzschlussvorrichtung (7, 8) als selbststeuernde Ventileinheit, vorzugsweise als Druckbegrenzungsventil, ausgebildet ist.

7. Hydraulische Antriebsanordnung nach einem der vorhergehenden Ansprüche, **dadurch gekennzeichnet, dass** eine Verzögerungseinheit, vorzugsweise ein Verzögerungsrelais (15, 16), vorgesehen ist, die mit einem Steuereingang der Kurzschlussvorrichtung (7, 8) verbunden ist.

8. Hydraulische Antriebsanordnung nach einem der vorhergehenden Ansprüche, **dadurch gekennzeichnet, dass** die Kurzschlussvorrichtung (7, 8) in die Gangwechseleinheit (10, 11, 20, 21) und / oder die Flusssteuerungsvorrichtung (9) integriert ist.

9. Hydraulische Antriebsanordnung nach einem der vorhergehenden Ansprüche, **dadurch gekennzeichnet, dass** die hydraulische Antriebsanordnung (1) eine Steuereinheit (14) zur Steuerung der Kurzschlussvorrichtung (7, 8) aufweist.

10. Fahrzeug (100) mit einer hydraulischen Antriebsanordnung (1) nach einem der vorhergehenden Ansprüche.

11. Verfahren zum Wechseln zwischen zwei hydraulischen Betriebsmodi einer hydraulischen Antriebsanordnung (1) eines Fahrzeugs (100), die einen Hoch-(Hi, H₂) und einen Niederdruckstrang (L₁, L₂ aufweist, umfassend die Schritte:
a) Wechseln zwischen den zwei Betriebsmodi zu einem Wechselzeitpunkt (t_{W});
b) Herstellen eines Kurzschlusses zwischen Hoch- (H₁, H₂) und Niederdruckstrang (L₁, L₂) zu einem vorgegebenen Auslösezeitpunkt (t_{A}) und/oder bei Eintritt eines Start-Ereignisses (Eₛ), wobei der Druck im Hochdruckstrang (H₁, H₂) in einem Normaldruckbereich liegt;
c) Aufrechterhalten des Kurzschlusses über eine vorgegebene Haltedauer (Δt) und/oder bis zum Eintritt eines vordefinierten End-Ereignisses (E_{E}).

12. Verfahren nach Anspruche 11, **dadurch gekennzeichnet, dass** zwischen den zwei Betriebsmodi durch Veränderung eines Schluckvolumens eines hydraulischen Verbrauchers gewechselt wird.

13. Verfahren nach einem der vorhergehenden Ansprüche 11 oder 12, **dadurch gekennzeichnet, dass** zwischen den zwei Betriebsmodi durch Veränderung eines Durchflusspfades eines Hydraulikfluids durch die hydraulische Antriebsanordnung (1) gewechselt wird.

14. Verfahren nach einem der vorhergehenden Ansprüche 11 bis 13, **dadurch gekennzeichnet, dass** der Auslösezeitpunkt (t_{A}) vor, zeitgleich zum oder weniger als 1 s nach dem Wechselzeitpunkt (t_{w}) liegt.

15. Verfahren nach einem der vorhergehenden Ansprüche, **dadurch gekennzeichnet, dass** die Haltedauer (Δt) < 0,5 s, vorzugsweise < 0,3 s, beträgt.

## Claims

1. Hydraulic drive arrangement (1) for a vehicle (100), comprising a high-pressure line (H₁, H₂) and a low-pressure line (L₁, L₂), wherein the hydraulic drive arrangement (1) can be operated in at least two hydraulic operating modes, **characterised in that** a controllable short-circuiting device (7, 8) is arranged between the high-pressure line (H₁, H₂) and the low-pressure line (L₁, L₂), allowing for the production of a short circuit between the high-pressure line (H₁, H₂) and the low-pressure line (L₁, L₂).

2. Hydraulic drive arrangement according to claim 1, **characterised in that** a hydraulic consumer, preferably a hydraulic wheel motor (2, 3, 4, 5), is arranged between the high-pressure line (H₁, H₂) and the low-pressure line (L₁, L₂).

3. Hydraulic drive arrangement according to one of the preceding claims, **characterised in that** the hydraulic drive arrangement (1) has a gear-change unit (10, 11, 20, 21) by means of which the capacity of the hydraulic consumer can be varied.

4. Hydraulic drive arrangement according to one of the preceding claims, **characterised in that** the hydraulic drive arrangement (1) has a flow-control device (9) for controlling the flow path of a hydraulic fluid through the hydraulic drive arrangement (1).

5. Hydraulic drive arrangement according to one of the preceding claims, **characterised in that** the controllable short-circuiting device (7, 8) has a valve unit.

6. Hydraulic drive arrangement according to one of the preceding claims, **characterised in that** the valve unit of the short-circuiting device (7, 8) is designed as an automatic valve unit, preferably as a pressure-limiting valve.

7. Hydraulic drive arrangement according to one of the preceding claims, **characterised by** a time-delay unit, preferably a time-delay relay (15, 16), connected to a control input of the short-circuiting device (7, 8).

8. Hydraulic drive arrangement according to one of the preceding claims, **characterised in that** the short-circuiting device (7, 8) is integrated into the gear-change unit (10, 11, 20, 21) and/or the flow-control device (9).

9. Hydraulic drive arrangement according to one of the preceding claims, **characterised in that** the hydraulic drive arrangement (1) has a control unit (14) for controlling the short-circuiting device (7, 8).

10. Vehicle (100) comprising a hydraulic drive arrangement (1) according to one of the preceding claims.

11. Method of changing between two hydraulic operating modes of a hydraulic drive arrangement (1) of a vehicle (100) having a high-pressure line (H₁, H₂) and a low-pressure line (L₁, L₂), comprising the steps:
a) changing between the two operating modes at a change-over time (t_{w});
b) producing a short circuit between the high-pressure line (H₁, H₂) and the low-pressure line (L₁, L₂) at a predetermined release time (t_{A}) and/or upon the occurrence of a start event (E_{S}), wherein the pressure in the high-pressure line (H₁, H₂) is in a normal pressure range, and
c) maintaining the short circuit for a predetermined holding period (Δt) and/or until the occurrence of a predefined end event (E_{E}).

12. Method according to claim 11, **characterised by** changing between the two operating modes by varying the capacity of a hydraulic consumer.

13. Method according to either of the preceding claims 11 or 12, **characterised by** changing between the two operating modes by varying the flow path of a hydraulic fluid through the hydraulic drive arrangement (1).

14. Method according to one of the preceding claims 11 to 13, **characterised in that** the release time (t_{A}) is before, synchronous with or less than 1 s after the change-over time (t_{w}).

15. Method according to one of the preceding claims, **characterised in that** the holding period (Δt) is less than 0.5 s, preferably less than 0.3 s.

## Revendications

1. Agencement d'entraînement hydraulique (1) pour un véhicule (100) avec un tuyau haute pression (H₁, H₂) et un tuyau basse pression (L₁, L₂), dans lequel l'agencement d'entraînement hydraulique (1) peut être actionné dans au moins deux modes de fonctionnement hydrauliques, **caractérisé en ce que** l'on agence entre le tuyau haute pression (H₁, H₂) et le tuyau basse pression (L₁, L₂) un dispositif de court-circuit réglable (7, 8) avec lequel un court-circuit peut être instauré entre les tuyaux haute pression (H₁, H₂) et basse pression (L₁, L₂).

2. Agencement d'entraînement hydraulique selon la revendication 1, **caractérisé en ce qu'**un utilisateur hydraulique, de préférence un moteur de roue hydraulique (2, 3, 4, 5), est agencé entre les tuyaux haute pression (H₁, H₂) et basse pression (L₁, L₂).

3. Agencement d'entraînement hydraulique selon l'une quelconque des revendications précédentes, **caractérisé en ce que** l'agencement d'entraînement hydraulique (1) présente une unité de changement de vitesse (10, 11, 20, 21) avec laquelle un volume de débit de l'utilisateur hydraulique peut être modifié.

4. Agencement d'entraînement hydraulique selon l'une quelconque des revendications précédentes, **caractérisé en ce que** l'agencement d'entraînement hydraulique (1) présente un dispositif de commande de flux (9) pour commander un trajet d'écoulement d'un fluide hydraulique par l'agencement d'entraînement hydraulique (1).

5. Agencement d'entraînement hydraulique selon l'une quelconque des revendications précédentes, **caractérisé en ce que** le dispositif de court-circuit (7, 8) présente une unité de vanne.

6. Agencement d'entraînement hydraulique selon l'une quelconque des revendications précédentes, **caractérisé en ce que** l'unité de vanne du dispositif de court-circuit (7, 8) se présente sous la forme d'une unité de vanne autonome, de préférence une vanne de limitation de pression.

7. Agencement d'entraînement hydraulique selon l'une quelconque des revendications précédentes, **caractérisé en ce qu'**il est prévu une unité de retard, de préférence un relais de retard (15, 16), qui est connectée à l'entrée de commande du dispositif de court-circuit (7, 8).

8. Agencement d'entraînement hydraulique selon l'une quelconque des revendications précédentes, **caractérisé en ce que** le dispositif de court-circuit (7, 8) est intégré à l'unité de changement de vitesse (10, 11, 20, 21) et/ou au dispositif de commande de flux (9).

9. Agencement d'entraînement hydraulique selon l'une quelconque des revendications précédentes, **caractérisé en ce que** l'agencement d'entraînement hydraulique (1) présente une unité de commande (14) pour commander le dispositif de court-circuit (7, 8).

10. Véhicule (100) avec un agencement d'entraînement hydraulique (1) selon l'une quelconque des revendications précédentes.

11. Procédé de commutation entre deux modes de fonctionnement hydrauliques d'un agencement d'entraînement hydraulique (1) d'un véhicule (100), qui présente un tuyau haute pression (H₁, H₂) et un tuyau basse pression (L₁, L₂), comprenant les étapes consistant à :
a) commuter entre les deux modes de fonctionnement à un moment de commutation (t_{w}) ;
b) instaurer un court-circuit entre les tuyaux haute pression (H₁, H₂) et basse pression (L₁, L₂) à un moment de déclenchement prédéterminé (t_{A}) et/ou à l'entrée d'un événement de départ (Eₛ), dans lequel la pression dans le tuyau haute pression (H₁, H₂) se situe dans une plage de pression normale ;
c) maintenir le court-circuit sur une durée de maintien prédéterminée (Δt) et/ou jusqu'à l'entrée d'un événement final prédéfini (E_{E}).

12. Procédé selon la revendication 11, **caractérisé en ce que** l'on commute entre les deux modes de fonctionnement par modification d'un volume de débit d'un utilisateur hydraulique.

13. Procédé selon l'une quelconque des revendications précédentes 11 ou 12, **caractérisé en ce que** l'on commute entre les deux modes de fonctionnement par modification d'un trajet d'écoulement d'un fluide hydraulique par l'agencement d'entraînement hydraulique (1).

14. Procédé selon l'une quelconque des revendications précédentes 11 à 13, **caractérisé en ce que** le moment de déclenchement (t_{A}) se situe avant le point le moment de changement (t_{w}), simultanément avec celui-ci ou moins de 1 s après celui-ci.

15. Procédé selon l'une quelconque des revendications précédentes, **caractérisé en ce que** la durée de maintien atteint (Δt) < 0,5 s, de préférence < 0,3 s.
